(19) Europäisches Patentamt
European Patent Office
Office européen des brevets

(11) **EP 2 378 341 A1**

(12) **EUROPÄISCHE PATENTANMELDUNG**

(43) Veröffentlichungstag:
**19.10.2011 Patentblatt 2011/42**

(51) Int Cl.:
*G02B 21/32* [(2006.01)]   *C12M 3/00* [(2006.01)]
*G01N 1/04* [(2006.01)]

(21) Anmeldenummer: **10160009.6**

(22) Anmeldetag: **15.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **MMI AG**
**8152 Glattbrugg (CH)**

(72) Erfinder: **Brill, Norbert**
**8280 Kreuzlingen (CH)**

(74) Vertreter: **HOFFMANN EITLE**
**Patent- und Rechtsanwälte**
**Arabellastraße 4**
**81925 München (DE)**

(54) **Verfahren zur kollisionsfreien Positionierung eines Mikromanipulationswerkzeugs**

(57) Ein Verfahren zur kollisionsfreien Positionierung eines Mikromanipulationswerkzeugs relativ zu einem Probenträger mithilfe eines Mikroskops, umfasst die folgenden Schritte: a) Bestimmen der fokalen Position $Z_P$ mindestens eines Punktes P auf der Oberfläche des Probenträgers durch Fokussieren eines Mikroskopobjektivs mit einer ersten numerischen Apertur $NA_1$ auf den mindestens einen Punkt; b) Positionieren des Mikromanipulationswerkzeugs auf der optischen Achse des Mikroskops; c) Bestimmen der fokalen Position $Z_M$ des Mikromanipulationswerkzeugs durch Fokussieren des Mikroskopobjektivs oder eines zweiten Mikroskopobjektivs mit einer zweiten numerischen Apertur $NA_2$ kleiner als die erste numerische Apertur $NA_1$ auf die Spitze des Mikromanipulationswerkzeugs; d) Berechnen des Absenkwegs $Z_A$ (P) unter Berücksichtigung eines vorbestimmten Toleranzprofils $\Delta Z$ durch die folgende Gleichung: $Z_A$ $(P)=Z_M-Z_P-\Delta Z$ mit $\Delta Z=\Delta Z_M+\Delta Z_P$, wobei $\Delta Z_M$ bzw. $\Delta Z_P$ eine vorbestimmte Toleranz bei der Bestimmung der Position des Manipulationswerkzeugs bzw. des Probenträgers ist; und e) Positionieren des Mikromanipulationswerkzeugs am Punkt P durch Absenken um den Absenkwegs $Z_A$(P)

Fig. 1a)

EP 2 378 341 A1

**Beschreibung**

Die vorliegende Erfindung betrifft ein Verfahren zur kollisionsfreien Positionierung eines Mikromanipulationswerkzeugs, insbesondere eines Werkzeugs zur Mikroinjektion, Einzelzellenentnahme, Mikrodissektion und ähnlichem.

Stand der Technik

Die molekulare Analyse reiner angereicherter Zellkulturen oder sogar einzelner Zellen ist eine wichtige Voraussetzung der medizinischen Genomik und Proteomik, und könnte in Zukunft für eine medizinische Profilierung von Patienten von wesentlicher Bedeutung werden. Bisher war dieses Ziel aufgrund maschineller sowie verfahrenstechnischer Beschränkungen bei der Zellmanipulation (z.B. der Zellsammlung oder der Mikroinjektion) nur schwer und mit nicht unerheblichem Zeitaufwand zu erreichen. Insbesondere die zur genotypischen und phänotypischen Charakterisierung notwendige Isolierung einzelner sowie seltener Zellen aus winzigen Proben stellte sich sehr schwierig dar, da einzelne Zellen vom Forschungspersonal unter einem Mikroskop erfasst und die erfasste Zelle dann mithilfe von Kapillaren manipuliert werden musste.

Um eine Automatisierung der Zellisolierung, das heißt insbesondere des Sammelns einzelner Zellen, zu ermöglichen, wäre eine genaue Positionsbestimmung der Kapillarenspitze, das heißt der Manipulatorspitze, in X-, Y- und Z-Richtung relativ zum Probenträger eines Mikroskops unter Berücksichtigung aller Toleranzen notwendig, welche durch die Objektive und die nicht exakt planare und horizontale Oberfläche des Probenträgers verursacht werden. Bisher war es jedoch nicht möglich, die Ist-Position der Manipulatorspitze in Z-Richtung automatisiert ohne zusätzliche Messmittel mit einer ausreichend kleinen Toleranz zu bestimmen. Somit war das Absammeln einzelner Zellen oder Partikel nur manuell oder halbautomatisch möglich. Zwar sind einige Ansätze zur Automatisierung dieses Vorgangs bekannt, da aber bei diesen bisher bekannten Verfahren die Abbildungstoleranzen des Objektivs keine Berücksichtigung fanden, traten Beschädigungen an der Manipulatorspitze auf. Bei manuellen Kalibrierverfahren sind hingegen die Handlingtools oft nicht genau genug, so dass nur sehr geübte Anwender diese System beherrschen.

In der EP 0 292 899 B1 wird beispielsweise nach Einsetzen des Gefäßes mit den zu sammelnden Zellen zunächst auf die Kapillarenspitze fokussiert und diese in die Mitte des Gesichtsfelds des Mikroskops positioniert. Daraufhin wird auf die Ebene der Zellen am Gefäßboden fokussiert und die Kapillare bis zum Eindringen in die Probe von Hand abgesenkt, wobei das Eindringen durch visuelle Überprüfung festgestellt wird. Die Position in der XY-Ebene sowie das Ausmaß der Bewegung in Z-Richtung beim Absenken werden in einem Steuerungscomputer erfasst, der in den nachfolgenden Verfahren diese Daten für das automatische Anstechen weiterer, per Computer im Koordinatensystem ausgewählter Zellpositionen verwendet. Nachteilig bei den hier beschriebenen Verfahren ist, dass nicht der Abstand zum Objektträger (das heißt der Position, an der die Kapillare beschädigt werden kann) ermittelt wird, sondern lediglich die Z-Koordinate der Oberfläche einer willkürlich ausgewählten Zelle aus der biologischen Probe. Toleranzen werden ebenfalls nicht berücksichtigt. Es kann somit nicht ausgeschlossen werden, dass die Kapillarenspitze und der Objektträger kollidieren und die Kapillare dadurch beschädigt wird. Zudem erfolgt hier die Feinjustierung über eine Testinjektion in die willkürlich ausgewählte Zelle. Da sich dabei Zellen, die zwar aus der gleichen Zellkultur stammen, jedoch unterschiedliche Außengeometrien aufweisen, auf dem Objektträger ablagern, ist dieser Art der Kalibrierung für die Positionsbestimmung sehr ungenau.

In der DE 10 2005 053 669 B4 wird eine Probenmanipulationsvorrichtung beschrieben, bei der mithilfe einer als Mikroskop ausgestalteten Positionsmesseinheit die Ist-Position der Manipulatorspitze bestimmt wird, während mit einer ebenfalls als Mikroskop ausgestalteten und auf der anderen Seite des Probentisches angeordneten Beobachtungseinheit die Soll-Position auf bzw. in der Probe beobachtet wird. Durch Vergleich der Daten von Beobachtungseinheit und Positionsmesseinheit kann die Steuerung die Manipulatorspitze zur Soll-Position verstellen. Nachteilig bei dieser Probenmanipulationsvorrichtung ist, dass das Positionsmessobjektiv eine Tiefenschärfe der Größenordnung der Manipulatorspitze aufweist und somit die Bestimmung der Z-Richtung dementsprechend ungenau ausfällt, mit einem Fehler der ungefähr dem Durchmesser der Kapillare selbst entspricht. Dieser Fehler wird jedoch nicht für die Positionierung berücksichtigt. Auch wird die Position des Objektträgers in der Z-Richtung nicht ermittelt, so dass bei der möglichen Abweichung der realen Position von der berechneten Position aufgrund des Fehlers des Positionsmessobjektivs Kollisionen zwischen Objektträger und Manipulatorspitze auftreten können.

In der DE 10 2007 046 267 A1 schließlich wird das Entnahmewerkzeug, zum Beispiel eine Kapillare, von einem Aufnahmeelement an einem Werkzeugkopf aufgenommen, die räumliche Position des Zellobjekts in einem Probenbehälter mittels einer Bildaufnahmeeinheit und einer Bildauswerteeinheit erfasst und das Entnahmewerkzeug mittels einer Steuer- und Speichereinheit und einer Verfahrmechanik zuerst in eine Kalibrierposition und dann in eine Position über dem Zellobjekt verfahren. Anschließend erfassen die Bildaufnahmeeinheit und die Bildauswerteeinheit auch die räumliche Position des Entnahmewerkzeugs über dem Zellobjekt und ermitteln eine Abweichung von der Soll-Position. Die Steuer- und Speichereinheit korrigiert dann die Position des Entnahmewerkzeugs mittels der Verfahrmechanik. Auch bei dieser Probenmanipulationsvorrichtung muss die Kapillarenspitze an der Kalibrierposition in das Gesichtsfeld des Mikroskops gefahren werden, was bei großen Vergrößerungen jedoch nur manuell bewirkt werden kann. Bei Absenken des Entnahmewerkzeugs werden außerdem die Toleranzen, die beispielsweise durch die Tiefenschärfe des Mikroskopobjektivs bestimmt sind, nicht beachtet, was zu einer falschen Berechnung der einzuhaltenden Distanz und somit zu Kollisionen führen kann.

Schließlich wird in keiner der genannten Schriften das Profil des Objektträgers, das heißt die Variation der Z-Position seiner Oberfläche als Funktion der Position in der XY-Ebene, bestimmt, so dass nach Verfahren in eine neue XY-Position unter Umständen aufgrund der Änderung der Z-Koordinate der Objektträgeroberfläche wiederum die Distanz nicht korrekt berechnet wird und die Kapillarenspitze mit dem Objektträger kollidieren kann. Zwar kann für den Fall einer derartigen Kollision gemäß der DE 10 2007 046 267 A1 ein zusätzlicher Sensor bzw. eine Abfederung des Manipulationswerkzeugs vorgesehen werden, was jedoch eine Beschädigung nicht zuverlässig ausschließt und darüber hinaus zu fehlerhaften Probeentnahmen und somit zu Zeitverlust führt.

Auch bei schief, das heißt nicht exakt horizontal eingelegten Objektträgern, einem in der Praxis häufig anzutreffenden, aber selten vom Bedienpersonal bemerkten Zustand, ergeben sich Positionsfehler der Kapillare. Die Kapillare könnte bereits beim Fahren in die Startposition beschädigt werden, insbesondere wenn die Startposition nur wenige $\mu$m von der Objektträgeroberfläche entfernt liegt. In der Praxis unterscheiden sich die Z-Positionen auf einem schiefen Objektträger im interessierenden Bereich um bis zu 30 $\mu$m, und ist zudem der Mikroskopeinsatz für die Objektträger durch Staub oder ähnliches verunreinigt, können die Z-Positionen um mehr als 100 $\mu$m differieren. Bei der Verwendung von Glaspetrischalen schließlich kann der Fehler ein Vielfaches betragen. Sollte dennoch eine Kontaktkalibrierung mit Schrittweiten von < 1 $\mu$m zum Einsatz kommen, müssten also aus Sicherheitsgründen viel größere Abstände der Startposition vom Objektträger (> 100 $\mu$m) eingehalten werden, was in der Praxis erhebliche Nachteile mit sich bringt, da bei Schrittweiten < 1 $\mu$m eine Kontaktkalibrierung dann zu viel Zeit in Anspruch nehmen würde.

<u>Darstellung der Erfindung</u>

Es ist somit Aufgabe der vorliegenden Erfindung, ein Verfahren zur kollisionsfreien Positionierung eines Mikromanipulationswerkzeugs relativ zu einem Probenträger bereitzustellen, welches eine genaue und beschädigungsfreie Positionierung des Manipulationswerkzeugs über die gesamte Probenoberfläche auf voll automatische Weise erlaubt. Diese Aufgabe wird durch ein Verfahren mit den Merkmalen des Anspruchs 1 gelöst. Bevorzugte vorteilhafte Ausgestaltungen der Erfindung sind in den Unteransprüchen definiert.

Das erfindungsgemäße Verfahren zur kollisionsfreien Positionierung eines Mikromanipulationswerkzeugs relativ zu einem Probenträger mithilfe eines Mikroskops umfasst die folgenden Schritte:

a) Bestimmen der fokalen Position $Z_P$ mindestens eines Punktes P auf der Oberfläche des Probenträgers durch Fokussieren eines ersten Mikroskopobjektivs mit einer ersten numerischen Apertur $NA_1$ auf den mindestens einen Punkt; b) Positionieren des Mikromanipulationswerkzeugs auf der optischen Achse des Mikroskops; c) Bestimmen der fokalen Position $Z_M$ des Mikromanipulationswerkzeugs durch Fokussieren des genannten Mikroskopobjektivs oder eines zweiten Mikroskopobjektivs mit einer zweiten numerischen Apertur $NA_2$ kleiner als die erste numerische Apertur $NA_1$ auf die Spitze des Mikromanipulationswerkzeugs; d) Berechnen des Absenkwegs $Z_A$(P) unter Berücksichtigung eines vorbestimmten Toleranzprofils $\Delta Z$ durch die folgende Gleichung:

$$Z_A\left(P\right) = Z_M - Z_P - \Delta Z$$

mit

$$\Delta Z = \Delta Z_M + \Delta Z_P$$

wobei $\Delta Z_M$ bzw. $\Delta Z_P$ eine vorbestimmte Toleranz bei der Bestimmung der Position des Manipulationswerkzeugs bzw. des Probenträgers ist; e) Positionieren des Mikromanipulationswerkzeugs am Punkt P durch Absenken um den Absenkweg $Z_A$(P).

Unter Toleranz bzw. Toleranzprofil versteht der Fachmann hierbei eine der (einzelnen) optischen Komponente bzw. dem gesamten optischen System zugeordnete Ungenauigkeit bei der Positionsbestimmung, die in der Zellmikroskopie gewöhnlich in Einheiten von $\mu$m ($10^{-6}$ m) angegeben wird. Durch das erfindungsgemäße Verfahren kann somit das Manipulationswerkzeug ohne Kollision über den Probenträger bewegt werden, solange sich das Werkzeug außerhalb des Toleranzprofils des Probenträgers befindet. Das Manipulationswerkzeug kann mit einem Objektiv mit kleiner numerischer Apertur in einem Abstand von beispielsweise 1 bis 2 mm zum Probenträger erfasst werden, wobei dieser Abstand durch die Geometrie des Mikroskops und des Manipulators genügend genau vorgegeben ist. Eine Kollision kann somit sicher vermieden werden. Insgesamt kann also die Funktion, die Effizienz, die Zuverlässigkeit und nicht zuletzt die Bedienerfreundlichkeit einer Mikromanipulationsvorrichtung durch das erfindungsgemäße Verfahren verbessert werden. In der Routineanwendung kann das System voll automatisch arbeiten, wobei jedoch das Verfahren hier nicht auf eine voll automatische Abfolge und Durchführung der einzelnen Verfahrensschritte beschränkt ist. Es bleibt weiterhin möglich, die Bestimmung der fokalen Positionen sowie die Positionierung in X- und Y-Richtung und/oder das Absenken (Anheben) in Z-Richtung manuell durchzuführen. Egal welche Betriebsart gewählt wird, erlaubt es das Verfahren, das Mikromanipulationswerkzeug mit einer sehr hohen Positionsgenauigkeit von wenigen Mikrometernzu positionieren und dabei gleichzeitig die Kollision zwischen Probenträger und Werkzeug zu vermeiden. Insbesondere kann das Manipulationswerkzeug in einer Distanz kleiner dem Probendurchmesser und/oder dem Durchmesser des Werkzeugs selbst über dem Probenträger bewegt werden. Schließlich werden die ansonsten zur Kalibrierung nötigen Zeiten stark reduziert, da bereits durch die Bestimmung der fokalen Position des Probenträgers dem Verfahren ein Startwert für Messungen vorgegeben wird.

Die fokale Position ist dabei die Z-Koordinate der Position des betreffenden Punktes, gemessen auf oder in der Nähe der optischen Achse, an der der Punkt durch das Mikroskopobjektiv der Messung betrachtet scharf abgebildet wird, wobei die Schärfe der Abbildung automatisch durch ein Fokussierungssystem mit Bildsensoren oder manuell durch Betrachtung des Bildes einer Videokamera, die den zu fokussierenden Punkt zeigt, bestimmt werden kann.

Bei der Positionierung des Mikromanipulationswerkzeugs auf der optischen Achse des Mikroskops ist dabei ein vorbestimmter Abstand einzuhalten, der in der Regel 1 bis 2 mm von dem Probenträger beträgt.

Bevorzugt werden vor dem Schritt e) des Absenkens des Manipulationswerkzeugs die Schritte c) und d) mit einem jeweils weiteren, i-ten Mikroskopobjektiv (i>1 bzw. i>2) mit jeweils zunehmender numerischer Apertur ($NA_i$ > $NA_{i-1}$) wiederholt. Das heißt, dass zunächst im Schritt c) mit dem ersten Mikroskopobjektiv (numerische Apertur $NA_1$), oder mit dem zweiten Mikroskopobjektiv, dessen numerische Apertur $NA_2$ kleiner als die des ersten Mikroskopobjektivs zur Bestimmung der fokalen Position des Probenträgers ist, die Position des Manipulationswerkzeugs bestimmt wird und im Schritt d) der Absenkweg unter Beachtung eines vorbestimmten Toleranzprofils berechnet wird, dann aber zur Verbesserung der Genauigkeit der Bestimmung der Position des Manipulationswerkzeugs ein weiteres Objektiv mit höherer numerischer Apertur und dementsprechend kleinerer vorbestimmter Toleranz als das vorangehende Objektiv eingesetzt werden kann, und dadurch das Toleranzprofil, welches die Sicherheitsmarge für die Positionierung des Manipulationswerkzeugs darstellt, kleiner gemacht werden kann. Dieses Vorgehen kann iterativ weitergeführt werden, wodurch hohe Präzisionen im Mikrometerbereich realisierbar sind.

Obwohl gemäß der Erfindung die Toleranzen $\Delta Z_M$ und $\Delta Z_P$ des Manipulationswerkzeugs bzw. des Probenträgers willkürlich vorbestimmt werden können, ist es in einer besonders bevorzugten Ausführungsform der Erfindung vorgesehen, dass die Toleranz $\Delta Z_M$ des Manipulationswerkzeugs und/oder die Toleranz $\Delta Z_P$ des Probenträgers durch die Tiefenschärfe $d_{tief,i}$ des jeweiligen zu deren Positionsbestimmung verwendeten i-ten Objektivs gemäß folgender Gleichung gegeben ist:

$$\Delta Z_{M,P} = d_{tief,i} = \frac{\lambda \cdot n}{NA_i^2} + \frac{n}{M_i \cdot NA_i} \cdot e \qquad i = 1, 2, \ldots$$

wobei $\lambda$ die Wellenlänge des Beobachtungslichts ist, n der Brechungsindex des Mediums zwischen Mikroskopobjektiv und Probenträger ist, $M_i$ die Vergrößerung des i-ten Objektivs ist, und e das Auflösungsvermögen einer zur Beobachtung eingesetzten Videokamera ist.

Die Wellenlänge des Beobachtungslichts ist dabei bevorzugt eine Wellenlänge von 550 nm, die auch bei Verwendung von weißem Licht (d. h. einem Kontinuum von Wellenlängen im Bereich von ungefähr 400 bis 700 nm) genaue Ergebnisse liefert. Der Brechungsindex hängt dabei vom verwendeten Medium zwischen dem Mikroskopobjektiv und dem Probenträger ab und ist im Regelfall der Brechungsindex der Luft (n=1), obwohl auch eine Verwendung von Immersionsoptiken denkbar ist, bei der das Medium zwischen Mikroskopobjektiv und Probenträger ein Immersionsöl (n=1,515) oder Wasser (n=1,33) ist. Die Videokamera hat bevorzugt ein Standardauflösungsvermögen von e=10 $\mu$m, obwohl selbstverständlich feiner oder gröber auflösende Videokameras eingesetzt werden können. Durch Verwendung der Tiefenschärfe als Parameter bei der Bestimmung des Toleranzprofils kann nun auf reproduzierbare und sichere Weise die mögliche Abweichung, das heißt der Messfehler, bei der Positionsbestimmung von Probenträgeroberfläche und Manipulationswerkzeug bei dem Absenken des Werkzeugs berücksichtigt werden und somit Kollisionen mit der Probenträgeroberfläche sicher vermieden werden.

In einer weiteren bevorzugten Ausführungsform werden vor dem Schritt e) die Schritte a) bis d) für eine Vielzahl von vorbestimmten Punkten $P_j$ (j=1,2,...) auf der Oberfläche des Probenträgers durchgeführt, wird der entsprechende Absenkweg $Z_A(P_j)$ für jeden Punkt $P_j$ in einer Datenbank gespeichert und wird Schritt e) für jeden Punkt $P_j$ unter Berücksichtigung des gespeicherten Absenkwegs $Z_A(P_j)$ durchgeführt. Auf diese Weise kann, bei geeigneter Wahl der Vielzahl an vorbestimmten Punkten, auch bei unebenen Böden der Probenträger vor der Probenmanipulation die Probenträgeroberfläche mit einem Objektiv großer numerischer Apertur abgetastet werden und für jeden Punkt $P_j$ kann in Funktion seiner X- und Y-Koordinaten der entsprechende Absenkweg inklusive des Toleranzprofils gespeichert werden und bei späterer Auswahl eines beliebigen Punktes aus der Vielzahl zur Probenmanipulation abgerufen werden. Alternativ ist es möglich, anstatt des Absenkwegs $Z_A(P_j)$ die Fokusposition des Punktes $P_j$, seine X- und Y-Koordinaten sowie die Objektivdaten mit den Angaben über numerische Apertur und Vergrößerung zu speichern. Durch Erstellung einer derartigen Topografie der Probenträgeroberfläche können auch Probenträger mit unebenen Oberflächen, wie zum Beispiel Petrischalen und Ähnliches, in der Mikromanipulation eingesetzt und auch voll automatische gehandhabt werden.

Bevorzugt werden vor dem Schritt e) die Schritte a) bis c) für drei nicht auf einer gerade liegenden Punkte $P_1$, $P_2$, $P_3$ auf der Oberfläche des Probenträgers durchgeführt, wird aus deren ermittelten fokalen Position $Z_{P1}$, $Z_{P2}$, $Z_{P3}$ eine Ebenengleichung E(P) berechnet und wird in Schritt d) der Absenkweg $Z_A(P_j)$ für einen beliebigen Punkt $P_j$ auf der Oberfläche des Probenträgers berechnet durch

$$Z_A\left(P_j\right) = Z_M - E(P_j) - \Delta Z \ .$$

Dies ist insbesondere dann von Vorteil, wenn ein ansonsten ebener Probenträger wie zum Beispiel ein Objektträger (slide) nicht exakt senkrecht zur optischen Achse auf dem Mikroskoptisch liegt, was eine relativ häufige Fehlerquelle darstellt. Dies bedeutet, dass die Objektträgerebene aus der Fokusebene herausläuft, sobald der Mikroskoptisch zu einer anderen Position bewegt wird. Dadurch würde sich auch der Abstand zwischen Manipulationswerkzeug und Objektträgerebene verändern. Durch diese Ausführungsform des Verfahrens ist die Mikroskopsteuerung in der Lage, diesen Effekt zu kompensieren und den Fokus auf dem Probenträger und somit den Abstand zwischen Probenträger und Manipulationswerkzeug unabhängig von der X-Y-Position auf dem Probenträger einzuhalten.

Bevorzugt wird in Schritt c) die Position der Spitze des Manipulationswerkzeugs als fokale Position $Z_M$ bestimmt. Dadurch ist sichergestellt, dass der dem Probenträger am nächsten kommende operative Teil des Manipulationswerkzeugs in seiner Position kalibriert wird und so eine Berührung und mögliche Beschädigung durch Kollision des Werkzeugs mit dem Probenträger vermieden wird.

In einer weiteren besonders bevorzugten Ausführungsform werden in Schritt c) ein Verdrehungswinkel und ein Kippwinkel des Manipulationswerkzeugs kompensiert, indem die folgenden Schritte durchgeführt werden:

c1) Bestimmen der fokalen Position $Z_{Q1}$ eines ersten Punktes $Q_1$ auf der Spitze des Manipulationswerkzeugs durch Fokussieren auf den Punkt $Q_1$,
c2) Drehen des Manipulationswerkzeugs um seine Achse und Nachstellen des Mikroskopobjektivs zur Fokussierung des Punktes $Q_1$, bis die fokale Position $Z_{Q1}$ des Punktes $Q_1$ und eine fokale Position $Z_{Q2}$ eines zweiten Punktes $Q_2$ auf der Spitze des Manipulationswerkzeugs gleich sind,
c3) Bestimmen der fokalen Position $Z_{Q3}$ eines dritten Punktes $Q_3$ auf der Spitze des Manipulationswerkzeugs durch Fokussieren auf den Punkt $Q_3$,
c4) Verkippen des Manipulationswerkzeugs um eine zur Ebene des Probenträgers parallele Achse und Nachstellen des Mikroskopobjektivs zur Fokussierung des Punktes $Q_3$, bis die fokalen Positionen $Z_{Q1}$, $Z_{Q2}$ und $Z_{Q3}$ gleich sind,
c5) Festlegen der fokalen Position des Manipulationswerkzeugs $Z_A = Z_{Q1}$.

Durch Kompensation des Kippwinkels beziehungsweise des Verdrehwinkels des Manipulationswerkzeugs ist es möglich, extrem hohe Genauigkeiten bei der Kalibrierung der Position des Manipulationswerkzeugs relativ zum Probenträger zu erreichen, da auch die Gestalt der mit der Probe wechselwirkenden Endfläche des Manipulationswerkzeugs berücksichtigt wird. Dies ist insbesondere bei gezogenen Kapillaren oder solchen Kapillaren von Bedeutung, deren Spitze unter einem Winkel geschliffen bzw. gebrochen ist. Es wird nämlich dadurch sichergestellt, dass die Öffnung der Kapillare bzw. die aktive Seite des Manipulationswerkzeugs in minimaler und gleichmäßiger Entfernung von der Probe positioniert ist, und im Fall der Kapillare dadurch eine optimale Saug- bzw. Spülwirkung aufgrund des geringen Abstands erzielt werden kann. Beim Drehen des Manipulationswerkzeugs um seine Achse werden bevorzugt Schritte bis insgesamt maximal $\pm 5°$ durchgeführt. Dies ist aber unbedenklich, da bereits im Vorfeld die Kapillare mithilfe einer Richtungsmarkierung grob voreingestellt wird. Ähnliches gilt für den Neigungswinkel der Kapillare, der beispielsweise durch einen elektrischen Antrieb bevorzugt in kleinen Schritten von maximal $\pm 2°$ verkippt wird und auch hier im Vorfeld mithilfe der Winkelmarkierung der Neigungswinkel grob voreingestellt wurde.

Gemäß einer weiteren Ausführungsform kann im Schritt a) zusätzlich die fokale Position $Z_{cap}$ eines Punktes R auf der Oberfläche eines Ablagegefäßes durch Fokussieren des ersten Mikroskopobjektivs auf dem Punkt R bestimmt werden. Auf diese Weise ist es möglich, eine Kalibrierung auch in Bezug auf ein Ablagegefäß vorzunehmen, in welches beispielsweise vom Probenträger entnommenes Zellmaterial abgelegt wird. Da bei der Ablage in einem Ablagegefäß wie zum Beispiel einem Cap oder einem Tube im Gegensatz zu einem Grid auf einem Objektträger immer die gleiche Ablageposition angefahren wird, muss hier nur ein Fokuspunkt im Ablagegefäß bestimmt werden, was zu einer Beschleunigung des Verfahrens führt.

Vorzugsweise werden der oder die Punkte auf der Oberfläche des Probenträgers und/oder auf der Oberfläche des Ablagegefäßes durch dessen Verschieben mithilfe eines Positioniertisches, wie zum Beispiel eines Mikroskoptisches, angefahren. Der Positioniertisch arbeitet dabei in der X-Y-Ebene, so dass eine Entkopplung von Fokussierung und horizontaler Positionierung erreicht wird.

Es ist auch denkbar, in einer weiteren Ausführungsform die Bestimmung der fokalen Position mithilfe eines optischen Abstandsmesssystems durchzuführen. Dadurch kann ebenfalls auf vollautomatische Weise die Fokussierung mit einer Genauigkeit im Submikrometerbereich vorgenommen werden.

Als Ausführungsbeispiel von Mikromanipulationswerkzeugen sind zum Beispiel Kapillaren aus Glas oder Metall, Pipetten, Nadeln oder adhäsive Caps zu nennen, wobei das Manipulationswerkzeug auch aus mehreren Manipulationsspitzen in Kombination bestehen kann, beispielsweise eine Anordnung aus einer Anzahl n von Kapillaren oder einer Kombination aus Kapillare, Nadel und adhäsiven Cap. Schließlich ist auch denkbar, dass das Mikromanipulationswerkzeug eine Kombination aus Manipulationsspitzen mit anderen optischen Mikromanipulationswerkzeugen ist, wie zum Beispiel Kapillare und Mikrodissektor, Kapillare und Tweezer, Kapillare, Mikrodissektor und Tweezer, oder adhäsiver Cap und Tweezer.

Kurze Beschreibung der Zeichnungen

Im Folgenden wird die Erfindung anhand von Ausführungsbeispielen erläutert, welche mithilfe der folgenden Figuren anschaulich dargestellt werden.

Figur 1a) ist ein vergrößerter schematischer Ausschnitt einer Mikromanipulationsvorrichtung bei der Kalibrierung eines Mikromanipulationswerkzeugs, und Figur 1b) ist eine schematische Darstellung der Neigung des Probenträgers,

Figur 2 ist ein Flussdiagramm zur Verdeutlichung des erfindungsgemäßen Verfahrensablaufs zur Kalibrierung des Mikromanipulationswerkzeugs,

Figur 3 ist eine schematische Darstellung der Korrektur des Kippwinkels und des axialen Drehwinkels des Manipulationswerkzeugs,

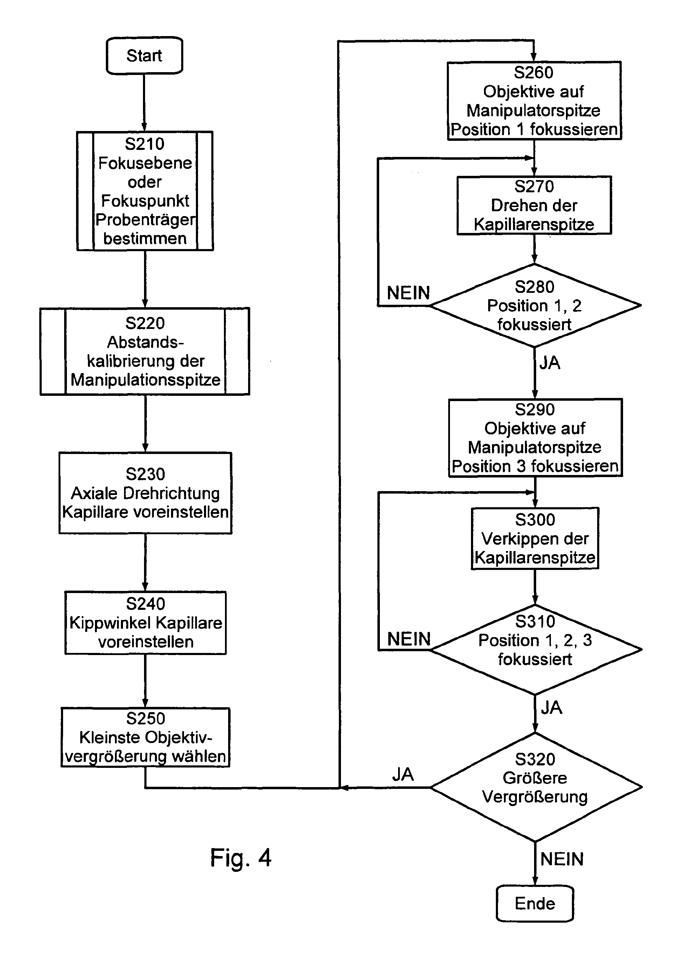

Figur 4 ist ein Flussdiagramm zur Veranschaulichung des Verfahrens zur Korrektur des Kippwinkels und des Verdrehungswinkels.

Wege zur Ausführung der Erfindung

Zunächst wird einleitend die automatisierte Isolierung beliebiger einzelner oder seltener Zellen beschrieben, welche in drei Schritten abläuft: Zellerkennung; Zellsammlung und Zellabgabe, bevor im Anschluss bevorzugte Ausführungsformen der vorliegenden Erfindung unter Bezugnahme auf die Zeichnungen beschrieben werden.

Die Erfinder haben zu diesem Zweck ein System bereitgestellt, das auf einem inversen Mikroskop (Umkehrmikroskop), einer Zellerkennungseinheit, einer automatisierten Kapillarverstellung, einer automatisierten Pumpe und einem Verschiebetisch basiert. Die Sammlung und Abgabe werden mithilfe einer (im Folgenden detailliert beschriebenen) hochpräzisen Pumpe gesteuert, die es erlaubt, Verfahrensabläufe festzulegen, die Nanoliter-Volumen eines Pumpmediums für den Abtrennvorgang der Zelle einsetzen und so die Grundlage schaffen für eine am Verfahrensende durchzuführende molekulare Analyse des Zellmaterials in lediglich 1 Mikroliter Medium.

Die (nicht haftenden) Zellen erfahren dabei keinerlei mechanische Belastungen: die Zellsammlung erfolgt lediglich aufgrund des die Zelle umgebenden Flüssigkeitsflusses. Unter optimalen Bedingungen können selbst teilweise anhaftende Zellen auf diese Weise gesammelt werden. Es besteht kein Kontakt zwischen den Zellen und der zur Sammlung eingesetzten Kapillare. Der Kapillardurchmesser kann wesentlich größer sein als jener der Zelle. Zum Beispiel können Zellen mit 6 µm Durchmesser effizient mit einer Kapillare von 40 µm Durchmesser gesammelt werden.

Die Abgabe der Zellen kann auf verschiedene Zielträger (deposits) erfolgen. So genannte "Grid deposits" sind dabei entweder raster-artige Punktablagen (wie zum Beispiel AmpliGrid®) oder raster-artig angeordnete kleine Behälter (wie die IBIDI Probentaschen-Objektträger). Einzelpunktablagen können aus einem transparenten Deckel, einem PCR-Röhrchen oder einer Mikrofluid-Varrichtung bestehen. Wie auch immer der Zielträger beschaffen ist, seine Größe sollte in der Regel nicht die Größe von Standardobjektträgern überschreiten, damit diese in die Mehrfachhalterung für Objektträger auf dem Verschiebetisch eingesetzt werden können. Für größere Zielträger wie zum Beispiel Well Plates müsste die Halterung angepasst werden.

Die Sammlung und Abgabe der Zellen kann auf verschiedene Arten erfolgen: von der manuellen bis zur voll automatisierten Betriebsart mit Zellerkennung. Jedoch ist es selbst bei der manuellen Betriebsart nicht notwendig, irgendeine Komponente des Systems (Mikroskop, Pumpe, Kapillare) von Hand zu bedienen: alle Betriebsvorgänge werden durch den Benutzer vom PC aus gestartet.

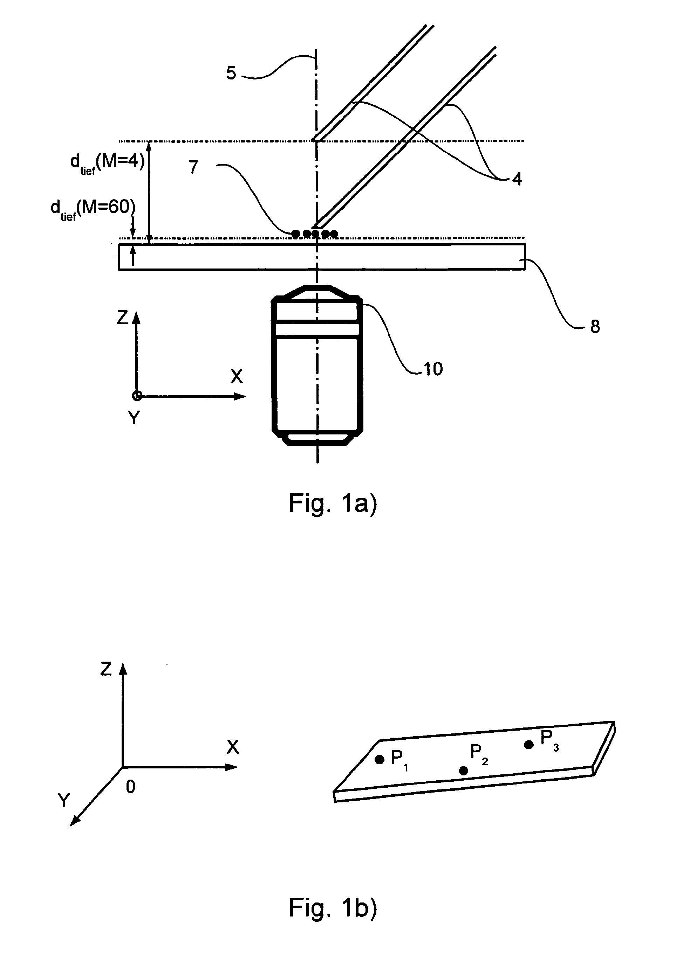

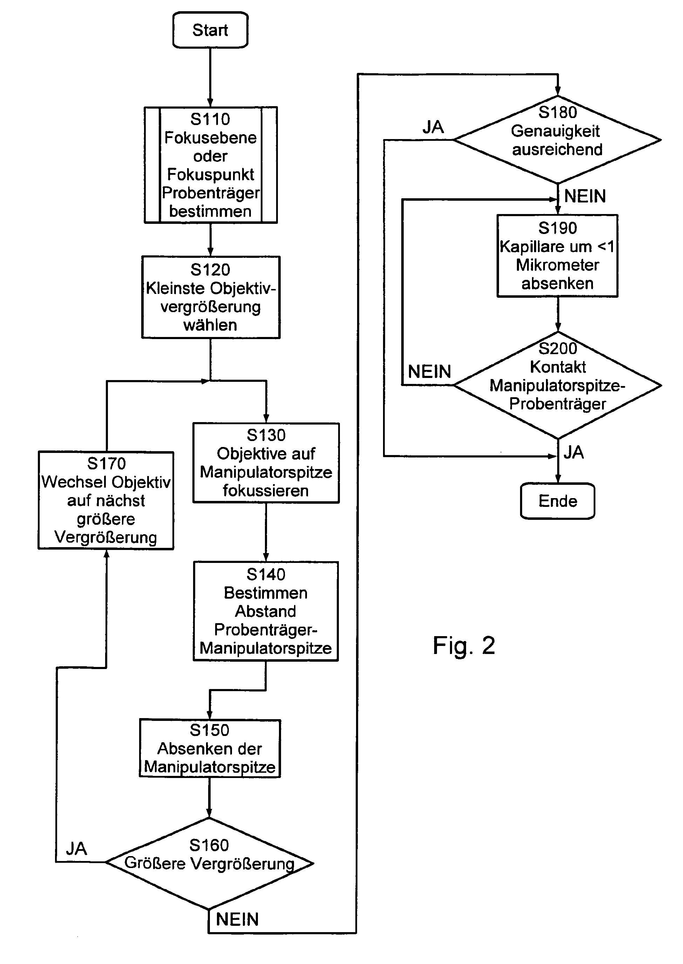

In Figur 1a) ist schematisch ein Objektträger 8 gezeigt, auf dem Probenmaterial 7, beispielsweise einzelne Zellen, getragen werden. Der Mikroskopobjektträger 8 kann auf einem Mikroskoptisch (nicht gezeigt) in XY-Richtung positioniert werden. Die Positionierung in Z-Richtung, das heißt die Fokussierung, erfolgt durch Verstellen eines Objektivs 10 entlang der optischen Achse 5. Als Mikromanipulationswerkzeug ist in der vorliegenden Ausführungsform eine Kapillare 4 dargestellt. In Figur 2 hingegen ist ein Flussdiagramm dargestellt, anhand dessen das erfindungsgemäße Verfahren, zusammen mit Figur 1a) und b), nun beschrieben wird.

Wie aus den Figuren 1a) und b) ersichtlich ist, liegt im vorliegenden Ausführungsbeispiel der Probenträger 8, ein herkömmlicher Objektträger aus Glas, nicht exakt senkrecht zur optischen Achse 5 auf dem Mikroskoptisch (nicht gezeigt), sondern ist um einen kleinen Winkel geneigt. Dies bedeutet, dass die Objektträgerebene aus der Fokussierungsebene hinausläuft, sobald der Mikroskoptisch an eine andere Position verfahren wird. Dabei würde sich auch der Abstand zwischen der Spitze der Kapillare und der Objektträgerebene verändern. Um dies zu verhindern, muss man den Verkippungswinkel des Objektträgers 8 kennen und kann dann so die beiden Effekte kompensieren.

In Schritt S110 (Fig. 2) wird zu Beginn der Fokussierungsebenenbestimmung zunächst das hierfür zu verwendende Objektiv 10 ausgewählt, wobei eine stärkere Vergrößerung zu einer genaueren Neigungswinkelbestimmung aufgrund kleinerer Toleranzprofile führt. Ein Vergleich der Toleranzprofile von Objektiven verschiedener Vergrößerungen und numerischer Aperturen ist in Tabelle 1 gezeigt.

Tabelle 1

| Toleranzprofile verschiedener Mikroskopobjektive $(\lambda = 550\,um,\ n = 1,\ e = 10\,\mu m)$ | | |
|---|---|---|
| **Vergrößerung des Objektives (M)** | **Numerische Apertur (NA)** | **Toleranzprofil $d_{tief}\ [\mu m]$** |
| 4 | 0,13 | 103,6 |
| 10 | 0,3 | 18,8 |
| 20 | 0,45 | 7,6 |
| 40 | 0,6 | 3,8 |
| 60 | 0,7 | 2,8 |
| 100 | 0,95 | 1,4 |

Im vorliegenden Fall wird ein Objektiv mit $M_1$=60 und $NA_1$=0,7 gewählt, also mit einer großen numerischen Apertur. Es werden nun auf dem Objektträger 8 nacheinander drei Punkte $P_1$, $P_2$ und $P_3$ angefahren, die nicht alle auf einer gemeinsamen Gerade liegen und somit die Ebene des Objektträgers 8 aufspannen. Durch den Verstelltrieb (Mikroskoptisch) wird das Objektiv 10 zunächst über die Position eines Punktes $P_1$ gefahren und auf den Punkt $P_1$ fokussiert. Die X-Y-Koordinaten sowie die Koordinate $Z_{P1}$ der fokalen Position des Punktes $P_1$ werden bestimmt und in der Mikroskopsteuerung gespeichert. Dann fährt der Mikroskoptisch an die zweite Position, an welcher sich das Objektiv über dem Punkt $P_2$ befindet. Das Objektiv 10 wird auf den Punkt $P_2$ fokussiert und die X-, Y-Koordinaten sowie die Z-Koordinate (fokale Position $Z_{P2}$) wird gespeichert. Schließlich wird der Mikroskoptisch in die X-Y-Position verfahren, an der sich der Punkt $P_3$ auf der optischen Achse 5 befindet. Die X-, Y- Koordinaten und die fokale Position $Z_{P3}$ werden gespeichert. Die Steuerung kann nun anhand der X-, Y- und Z-Koordinaten der drei gespeicherten Punkte auf der Objektträgeroberfläche eine Ebenengleichung E(P) aufstellen, bzw. den Neigungswinkel des Objektträgers bezüglich der Waagerechten bestimmen (Schritt S110).

Im nächsten Schritt S120 wird nun die kleinste verfügbare Objektivvergrößerung (kleinste numerische Apertur) ausgewählt, um die Position des Manipulationswerkzeugs 4 zu bestimmen. Im folgenden Beispiel wird hierzu ein Objektiv 10 mit einer numerischen Apertur $NA_2$ von 0,13 und einer Vergrößerung $M_2$=4 ausgewählt. Das Mikromanipulations-

werkzeug 4, vorliegend eine Kapillare, wird mit seiner Spitze auf die optische Achse 5 bewegt und unter einem Abstand von 1 bis 2 mm vom Objektträger 8 positioniert. Mithilfe des Objektivs 10 mit kleinster Objektivvergrößerung wird nun die fokale Position $Z_M$ der Kapillarenspitze bestimmt, indem auf die Spitze fokussiert wird (S130). Mit den obigen Daten kann der Abstand zwischen der Fokusebene des Objektträgers und der Manipulationsspitze für jeden Punkt in der X-Y-Ebene bestimmt werden und beträgt $Z_M$ - E (P) (S140). Allerdings berücksichtigt dieser Abstand noch nicht die bei der Positionsbestimmung der Kapillare 4 sowie des Objektträgers 8 eingehenden Toleranzen; diese müssen berücksichtigt werden, um ein zu tiefes Absenken der Kapillarenspitze 4 zu verhindern. Im folgenden Fall sind die Toleranzen der Positionsbestimmung durch die Objektivparameter vorbestimmt und können wie folgt berechnet werden. Dabei ist der als Tiefenschärfe bezeichnete Schärfebereich die Ausdehnung des Bereichs im Objektraum eines abbildenden optischen Systems, der auf der Bildebene hinreichend scharf abgebildet wird.

$$\Delta Z_{M,P} = d_{tief,i} = \frac{\lambda \cdot n}{NA_i^2} + \frac{n}{M_i \cdot NA_i} \cdot e \qquad\qquad i = 1, 2, \ldots$$

Aus dieser Gleichung geht hervor, dass zur Verringerung der Tiefenschärfe und somit einer Erhöhung der Präzision bei der Positionsbestimmung, einerseits Objektive mit größerer numerischer Apertur oder Vergrößerung genommen werden können oder aber mit Licht kürzerer Wellenlänge gearbeitet werden kann. Da es im Routinebetrieb aus praktischen Gründen nicht vorteilhaft ist, die Wellenlänge des Mikromanipulationssystems zu ändern, wird vorliegend die Vergrößerung bzw. die numerische Apertur der Objektive geändert, um die Positionierungsgenauigkeit zu erhöhen.
Um also ein Kollidieren der Kapillare 4 mit dem Objektträger 8 zu verhindern, wird dem Abstand zwischen Kapillarenspitze und Objektträger ein Toleranzprofile $\Delta Z = \Delta Z_M + \Delta Z_P$ abgezogen, in das die Tiefenschärfe der beiden bisher zu Positionsbestimmung verwendeten Objektive, ein Mal für den Objektträger und das andere Mal für die Kapillarenspitze, eingehen. Somit wird der Absenkweg $Z_A(P)$ in Abhängigkeit der fokalen Positionen von Kapillarenspitze und Objektträger unter Berücksichtigung der durch die Tiefenschärfen gegebenen Toleranzen wie folgt bestimmt:

$$Z_A(P) = Z_M - E(P) - \Delta Z = Z_M - E(P) - d_{tief,1} - d_{tief,2} =$$
$$= Z_M - E(P) - \left( \frac{\lambda \cdot n}{NA_1^2} + \frac{\lambda \cdot n}{NA_2^2} + \frac{n}{M_1 \cdot NA_1} \cdot e + \frac{n}{M_2 \cdot NA_2} \cdot e \right)$$

Anschließend wird die Probe somit um den Betrag ZA(P) abgesenkt (S150). Es bleibt nur noch zu bestimmen, ob die gegenwärtige Mikroskopvergrößerung und somit Genauigkeit der Toleranzbestimmung für die Anwendung ausreichend ist oder nicht (S160). Wird eine größere Arbeitsvergrößerung benötigt, so kann ein Objektiv mit größerer numerischer Apertur verwendet werden (S170) und die Bestimmung der Kapillarenspitze mit höherer Präzision erneut durchgeführt werden (S130-S150). In der obigen Gleichung wird dann entsprechend der Wert für die Tiefenschärfe des Objektivs, welches für die nun verwendete weitere (i-te) Positionsbestimmung der Kapillarenspitze verwendet wurde, ersetzt. Der Wert für die Tiefenschärfe, welche für die Positionsbestimmung des Objektträgers verwendet wurde bleibt unverändert.
Sollte die Genauigkeit nun ausreichend sein (S180), kann die Kalibrierung abgeschlossen werden. Allerdings kann es Situationen geben, in denen eine noch genauere Positionierung von Nöten ist, jedoch keine Objektive mit größerer numerischer Apertur mehr zur Verfügung stehen. In einem derartigen Fall ist es möglich, die Kapillarenspitze in Schritten kleiner als 1 $\mu$m abzusenken (S190), bis diese die Oberfläche des Objektträgers leicht berührt (S200). Bei dieser Berührung wird die Kapillare verbogen (aufgrund Ihrer Elastizität aber nicht brechen) und ändert somit auch ihre Position in der X-Y-Ebene, was unter dem Mikroskop erkennbar ist. Auf diese Weise kann eine maximale Absenkung definiert werden, die für diesen Punkt nicht überschritten werden darf. Nach dieser Bestimmung des Kontaktpunktes zwischen Kapillare und Objektträger ist die Genauigkeit der Kapillarenspitzenposition zum Objektträger nun nicht mehr von der Grösse des Toleranzprofils, sondern von der Genauigkeit der Z-Achse des Manipulators abhängig, so dass eine Positionsgenauigkeit von weniger als 1 $\mu$m erzielt wird.
Versuche haben gezeigt, dass es ausreicht, den Kalibriervorgang mit der kleinsten Vergrößerung zu starten und dann in das Objektiv mit der größten Vergrößerung zu wechseln. Dadurch wird der Zeitaufwand für die Kalibrierung erheblich reduziert. Für kleine Arbeitsvergrößerungen (bis maximal 20 x) kann bei Verwendung eines Objektivs mit großem Arbeitsabstand die Kalibrierung direkt mit dem Arbeitsobjektiv vorgenommen werden. In diesem Fall wird also mit einem Objektiv sowohl die Position des Objektträgers als auch der Kapillarenspitze bestimmt, und als Toleranzprofil geht die zweifache Tiefenschärfe des Objektivs ein. Es ist somit kein Objektivwechsel erforderlich.

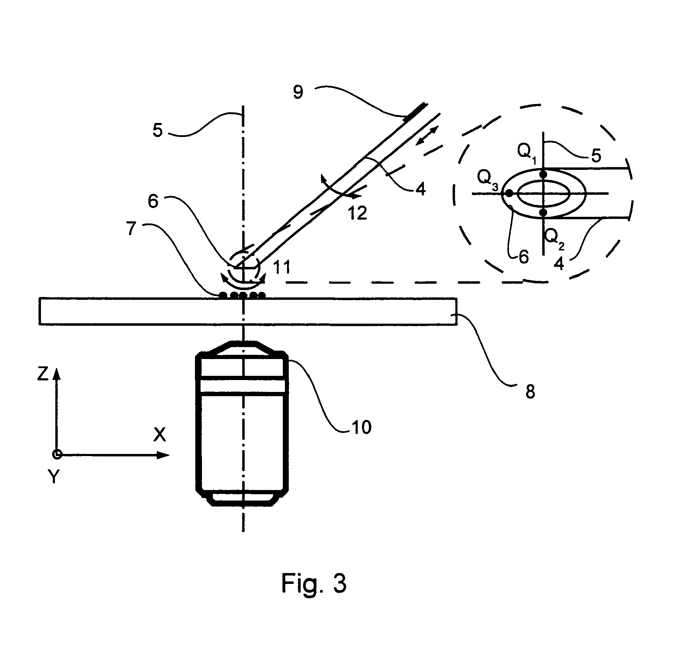

In einer weiteren Ausführungsform, die anhand der Fig. 3 veranschaulicht wird, wird der Kippwinkel 11 bzw. die Verdrehung 12 der Kapillare 4 vor der Kalibrierung kompensiert. Eine derartige Verkippung bzw. Verdrehung führt dazu, dass die der zu sammelnden Zellkultur und dem Objektträger 8 zugewandte Öffnung der Kapillare 4 nicht in einer Ebene parallel zum Objektträger liegt und dadurch eine ungleichmäßige Saugwirkung bzw. Spülwirkung der Kapillare 4 resultieren kann, da eine Seite der Kapillarenspitze weiter vom Objektträger 8 bzw. dem Zellmaterial 7 entfernt ist als eine andere Seite. Nachdem der Neigungswinkel des Objektträgers 8 wie oben beschrieben berechnet (S210) und die Kapillare abgesenkt wurde (S220), wird zunächst die Kapillarenspitze auf die optische Achse 5 gefahren und die axiale Verdrehung 12 der Kapillare 4 mit einer Richtungsmarkierung 9 beim Einsetzen in die Kapillarenhalterung voreingestellt (S230). Auch der Verkippungswinkel 11 wird mithilfe der Markierung 9 grob voreingestellt (S240). Wie zuvor wird das Objektiv 10 mit der niedrigsten Vergrößerung ausgewählt und die Spitze der Kapillare 4 in die optische Achse 5 gefahren (S250). Der Abstand zwischen Objektträger 8 und Kapillarenspitze beträgt ca. 1 bis 2 mm. Das Objektiv 10 wird dann auf einem Punkt Q1 auf der Kapillarenspitze fokussiert und seine X-, Y- und Z-Koordinaten gespeichert (S260).

Mit einem elektrischen Antrieb wird die Kapillare 4 in kleinen Schritten um ihre Achse gedreht (S270), bis sowohl der Punkt Q1 als auch ein zweiter Punkt Q2 auf der Kapillarenspitze fokussiert sind (S280). Die maximale Verdrehung beträgt hierbei $\pm 5°$. Die neue Z-Koordinate des Objektives 10 wird durch Nachfokussieren auf Q1 ermittelt. Sollten die Punkte Q1 und Q2 nicht gleichzeitig scharf abgebildet werden können, so wird die Kapillare 4 erneut in kleinen Schritten gedreht, bis die Punkte Q1 und Q2 schließlich gemeinsam fokussiert sind.

Anschließend wird durch Verfahren des Mikromanipulators ein weiterer Punkt Q3 auf der Kapillarenspitze in die optische Achse 5 gefahren und mit dem Objektiv 10 fokussiert (S290). Die X-, Y- und Z-Koordinaten des Punkts Q3 werden gespeichert.

Nun wird der Kippwinkel 11 der Kapillare 4 durch einen elektrischen Antrieb in kleinen Schritten verkippt (S300), maximal um $\pm 2°$. Die Z - Koordinate des Objektives wird durch Nachfokussieren auf Punkt Q1 ermittelt. Wenn die Punkte Q1, Q2 und Q3 nicht gleichzeitig scharf abgebildet werden können (S310, "NEIN"), so werden dann wiederum durch Verkippen die Punkte Q1, Q2 und Q3 gemeinsam in den Fokus gebracht. Sobald alle drei Punkte fokussiert sind (S310, "JA"), das heißt die fokalen Positionen in Z-Richtung der Punkte Q1, Q2 und Q3 gleich sind, wird einer dieser Werte für die Berechnung des Absenkwegs $Z_A$ verwendet. Die Öffnung (Spitze) der Kapillare 4 ist nach Abschluss dieser Prozedur parallel zur Oberfläche des Zellmaterials 7 bzw. des Objektträgers 8.

Sollte schließlich eine größere Genauigkeit von Nöten sein (S320), so kann die Korrektur des Kippwinkels 12 und der axialen Drehrichtung 11 auch mit einer größeren Vergrößerung wiederholt werden (S260-S310). Andererseits ist es möglich, für kleine Arbeitsvergrößerungen bis maximal 20 x die Kalibrierung direkt mit dem Arbeitsobjektiv vorzunehmen. Somit ist kein Objektivwechsel erforderlich.

**Patentansprüche**

1. Verfahren zur kollisionsfreien Positionierung eines Mikromanipulationswerkzeugs relativ zu einem Probenträger mithilfe eines Mikroskops, umfassend die folgenden Schritte:

   a) Bestimmen der fokalen Position $Z_P$ mindestens eines Punktes P auf der Oberfläche des Probenträgers durch Fokussieren eines Mikroskopobjektivs mit einer ersten numerischen Apertur $NA_1$ auf den mindestens einen Punkt;

   b) Positionieren des Mikromanipulationswerkzeugs auf der optischen Achse des Mikroskops;

   c) Bestimmen der fokalen Position $Z_M$ des Mikromanipulationswerkzeugs durch Fokussieren des Mikroskopobjektivs oder eines zweiten Mikroskopobjektivs mit einer zweiten numerischen Apertur $NA_2$ kleiner als die erste numerische Apertur $NA_1$ auf die Spitze des Mikromanipulationswerkzeugs;

   d) Berechnen des Absenkwegs $Z_A(P)$ unter Berücksichtigung eines vorbestimmten Toleranzprofils $\Delta Z$ durch die folgende Gleichung:

$$Z_A(P) = Z_M - Z_P - \Delta Z$$

   mit

$$\Delta Z = \Delta Z_M + \Delta Z_P$$

wobei $\Delta Z_M$ bzw. $\Delta Z_P$ eine vorbestimmte Toleranz bei der Bestimmung der Position des Manipulationswerkzeugs bzw. des Probenträgers ist;
e) Positionieren des Mikromanipulationswerkzeugs am Punkt P durch Absenken um den Absenkwegs $Z_A$(P).

2. Verfahren nach Anspruch 1, wobei vor dem Schritt e) die Schritte c) und d) mit einem jeweils weiteren, i-ten Mikroskopobjektiv (i>1 bzw. i>2) mit jeweils zunehmender numerischer Apertur ($NA_i > NA_{i-1}$) wiederholt werden.

3. Verfahren nach Anspruch 1 oder 2, wobei die Toleranz $\Delta Z_M$ des Manipulationswerkzeugs und/oder die Toleranz $\Delta Z_P$ des Probenträgers durch die Tiefenschärfe $d_{tief,i}$ des jeweiligen zu deren Positionsbestimmung verwendeten i-ten Objektivs gemäß folgender Gleichung gegeben ist:

$$\Delta Z_{M,P} = d_{tief,i} = \frac{\lambda \cdot n}{NA_i^2} + \frac{n}{M_i \cdot NA_i} \cdot e \qquad\qquad i = 1, 2, \ldots$$

wobei $\lambda$ die Wellenlänge des Beobachtungslichts ist, n der Brechungsindex des Mediums zwischen Mikroskopobjektiv und Probenträger ist, $M_i$ die Vergrößerung des i-ten Objektivs ist, und e das Auflösungsvermögen einer zur Beobachtung eingesetzten Videokamera ist.

4. Verfahren nach Anspruch 1, 2 oder 3, wobei vor dem Schritt e) die Schritte a) bis d) für eine Vielzahl von vorbestimmten Punkten $P_j$ (j=1, 2, ...) auf der Oberfläche des Probenträgers durchgeführt werden, der entsprechende Absenkweg $Z_A$($P_j$) für jeden Punkt $P_j$ in einer Datenbank gespeichert wird und Schritt e) für jeden Punkt $P_j$ unter Berücksichtigung des gespeicherten Absenkwegs $Z_A$($P_j$) durchgeführt wird.

5. Verfahren nach einem der vorangegangenen Ansprüche, wobei vor dem Schritt e) die Schritte a) bis c) für drei nicht auf einer Geraden liegende Punkte $P_1$, $P_2$, $P_3$ auf der Oberfläche des Probenträgers durchgeführt werden, aus deren ermittelten fokalen Positionen $Z_{P1}$, $Z_{P2}$, $Z_{P3}$ eine Ebenengleichung $E$(P) berechnet wird und in Schritt d) der Absenkweg $Z_A$($P_j$) für einen beliebigen Punkt $P_j$ auf der Oberfläche des Probenträgers durch

$$Z_A\left(P_j\right) = Z_M - E(P_j) - \Delta Z$$

bestimmt wird.

6. Verfahren nach einem der vorangegangenen Ansprüche, wobei in Schritt c) die Position der Spitze des Manipulationswerkzeugs als fokale Position $Z_M$ bestimmt wird.

7. Verfahren nach Anspruch 6, wobei in Schritt c) ein Verdrehungswinkel und ein Kippwinkel des Manipulationswerkzeugs kompensiert werden, indem die folgenden Schritte durchgeführt werden:

c1) Bestimmen der fokalen Position $Z_{Q1}$ eines ersten Punktes $Q_1$ auf der Spitze des Manipulationswerkzeugs durch Fokussieren auf den Punkt $Q_1$,
c2) Drehen des Manipulationswerkzeugs um seine Achse und Nachstellen des Mikroskopobjektivs zur Fokussierung des Punktes $Q_1$, bis die fokale Position $Z_{Q1}$ des Punktes $Q_1$ und eine fokale Position $Z_{Q2}$ eines zweiten Punktes $Q_2$ auf der Spitze des Manipulationswerkzeugs gleich sind,
c3) Bestimmen der fokalen Position $Z_{Q3}$ eines dritten Punktes $Q_3$ auf der Spitze des Manipulationswerkzeugs durch Fokussieren auf den Punkt $Q_3$,
c4) Verkippen des Manipulationswerkzeugs um eine zur Ebene des Probenträgers parallele Achse und Nachstellen des Mikroskopobjektivs zur Fokussierung des Punktes $Q_3$, bis die fokalen Positionen $Z_{Q1}$, $Z_{Q2}$ und $Z_{Q3}$ gleich sind,
c5) Festlegen der fokalen Position des Manipulationswerkzeugs $Z_A = Z_{Q1}$.

8. Verfahren nach einem der vorangegangenen Ansprüche, wobei im Schritt a) zusätzlich die fokale Position $Z_{cap}$ eines Punktes R auf der Oberfläche eines Ablagegefäßes durch Fokussieren des ersten Mikroskopobjektivs auf den Punkt R bestimmt wird.

9. Verfahren nach einem der vorangegangenen Ansprüche, wobei der oder die Punkte auf der Oberfläche des Probenträgers und/oder des Ablagegefässes durch dessen Verschieben mithilfe eines Positioniertisches angefahren werden.

10. Verfahren nach einem der vorangegangenen Ansprüche, wobei die Bestimmung der fokalen Position mithilfe eines optischen Abstandsrrtesssystems durchgeführt wird.

Fig. 1a)

Fig. 1b)

Fig. 2

Fig. 3

```
                                      ┌──────────────────────────────┐
  ┌─────────┐                         │          S260                │
  │  Start  │                         │     Objektive auf            │
  └─────────┘                         │   Manipulatorspitze          │
       │                              │  Position 1 fokussieren      │
       ▼                              └──────────────────────────────┘
  ┌────────────────────┐                           │
  │       S210         │                           ▼
  │    Fokusebene      │             ┌──────────────────────────────┐
  │      oder          │             │          S270                │
  │    Fokuspunkt      │             │       Drehen der             │
  │   Probenträger     │             │    Kapillarenspitze          │
  │    bestimmen       │             └──────────────────────────────┘
  └────────────────────┘                           │
       │                                            ▼
       ▼                                    ╱────────────────╲
  ┌────────────────────┐          NEIN    ╱       S280         ╲
  │       S220         │◄─────────────── ╱    Position 1, 2     ╲
  │     Abstands-      │                 ╲      fokussiert      ╱
  │  kalibrierung der  │                  ╲────────────────────╱
  │ Manipulationsspitze│                           │ JA
  └────────────────────┘                           ▼
       │                              ┌──────────────────────────────┐
       ▼                              │          S290                │
  ┌────────────────────┐             │     Objektive auf            │
  │       S230         │             │   Manipulatorspitze          │
  │  Axiale Drehrichtung│            │  Position 3 fokussieren      │
  │ Kapillare voreinstellen│          └──────────────────────────────┘
  └────────────────────┘                           │
       │                                            ▼
       ▼                              ┌──────────────────────────────┐
  ┌────────────────────┐             │          S300                │
  │       S240         │             │     Verkippen der            │
  │ Kippwinkel Kapillare│            │    Kapillarenspitze          │
  │   voreinstellen    │             └──────────────────────────────┘
  └────────────────────┘                           │
       │                                            ▼
       ▼                                    ╱────────────────╲
  ┌────────────────────┐          NEIN    ╱       S310         ╲
  │       S250         │◄─────────────── ╱   Position 1, 2, 3   ╲
  │  Kleinste Objektiv- │                ╲     fokussiert       ╱
  │ vergrößerung wählen │                 ╲────────────────────╱
  └────────────────────┘                           │ JA
       │                                            ▼
       │                        JA          ╱────────────────╲
       └────────────────────────────────── ╱       S320         ╲
                                            ╲      Größere       ╱
                                             ╲   Vergrößerung   ╱
                                              ╲───────────────╱
                                                    │ NEIN
                                                    ▼
                                              ┌─────────┐
                                              │  Ende   │
                                              └─────────┘
```

Fig. 4

Europäisches
Patentamt
European
Patent Office
Office européen
des brevets

**EUROPÄISCHER RECHERCHENBERICHT**

Nummer der Anmeldung

EP 10 16 0009

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/291502 A1 (TATEYAMA KIYOHIKO [JP]) 26. November 2009 (2009-11-26) | 1,2,6,9,10 | INV. G02B21/32 C12M3/00 G01N1/04 |
| Y | * Absatz [0038] - Absatz [0060]; Abbildungen 1,4,5 * ----- | 4,5,8 | |
| A,D | EP 0 292 899 A2 (ZEISS CARL FA [DE]; ZEISS STIFTUNG [DE]) 30. November 1988 (1988-11-30) * Spalte 7, Zeile 50 - Spalte 8, Zeile 26 * * Abbildungen 1,2 * ----- | 1-3,6,9,10 | |
| X,D | DE 10 2007 046267 A1 (AVISO GMBH [DE]) 2. April 2009 (2009-04-02) | 1,2,6 | |
| A | * Absatz [0064] - Absatz [0073] * ----- | 3 | |
| A | JP 2005 258413 A (OLYMPUS CORP) 22. September 2005 (2005-09-22) * Absatz [0048] - Absatz [0064] * ----- | 1-3,6,9,10 | |
| Y | EP 1 873 232 A1 (FUJITSU LTD [JP]) 2. Januar 2008 (2008-01-02) * Absatz [0073] - Absatz [0088] * * Abbildungen 17-20 * ----- | 4,5 | RECHERCHIERTE SACHGEBIETE (IPC) G02B C12M G01N |
| A | WO 02/052393 A1 (US GOV HEALTH & HUMAN SERV [US]; SMITH JEFFREY C [US]; NASH JAMES W [S) 4. Juli 2002 (2002-07-04) * Seite 23 - Seite 29 * * Abbildung 1 * ----- | 1-10 | |
| A | DE 101 36 572 A1 (EPPENDORF AG [DE]) 13. Februar 2003 (2003-02-13) * Absatz [0030] - Absatz [0045] * ----- | 1,4,5 | |
| Y,D | DE 10 2005 053669 A1 (KILPER ROLAND [DE]) 16. Mai 2007 (2007-05-16) | 8 | |
| A | * Abbildungen 1,2 * * Absatz [0023] - Absatz [0027] * ----- | 1-7,9,10 | |

Der vorliegende Recherchenbericht wurde für alle Patentansprüche erstellt

| Recherchenort | Abschlußdatum der Recherche | Prüfer |
|---|---|---|
| München | 21. Februar 2011 | von Hentig, Roger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

| Europäisches Patentamt
European Patent Office
Office européen des brevets |

## MANGELNDE EINHEITLICHKEIT
## DER ERFINDUNG
## ERGÄNZUNGSBLATT B

Nummer der Anmeldung

EP 10 16 0009

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3, 6, 9, 10

   beziehen sich auf Objektive unterschiedlicher numerischer Apertur.
   Als Beitrag der Ansprüche 2 und 3 zum Stand der Technik, ist die Verwendung von Objektiven unterschiedlicher numerischer Apertur, bzw. die Berücksichtigung der mit der numerischen Apertur verknüpften Tiefenschärfe zu sehen. Die in Ansprüchen 2 und 3 definierten Verfahrensschritte lösen das technische Problem das Manipulationswerkzeug schnell auf eine möglichst kleine Distanz zum Probenträger heranzuführen, ohne diesen zu berühren. Ansprüche 6, 9 und 10 können ebenfalls dieser Gruppe zugeordnet werden.
   ---

2. Ansprüche: 4, 5

   beziehen sich auf die Messung einer Vielzahl an Punkten auf der Oberfläche des Probenträgers. Die in diesen Ansprüchen definierten Verfahrensschritte lösen das Problem die Lage des Probenträgers zu erfassen.
   ---

3. Anspruch: 7

   bezieht sich auf die Messung dreier Punkte an der Spitze des Mikromanipulationswerkzeugs. Die in diesem Anspruch definierten Verfahrensschritte lösen das technische Problem, die Ausrichtung der Spitze des Mikromanipulationswerkzeugs zu erfassen.
   ---

4. Anspruch: 8

   bezieht sich auf einen Verfahrensschritt, bei dem die Lage eines Punktes auf der Oberfläche eines Ablagegefäßes bestimmt wird. Ein technisches Problem, das mittels dieses Verfahrensschrittes gelöst wird, kann darin gesehen werden, dass die Berührung des Mikromanipulationswerkzeugs in einer Ablegeposition mit dem Ablegegefäß verhindert wird.
   ---

**ANHANG ZUM EUROPÄISCHEN RECHERCHENBERICHT
ÜBER DIE EUROPÄISCHE PATENTANMELDUNG NR.**

EP 10 16 0009

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2011

| Im Recherchenbericht angeführtes Patentdokument | Datum der Veröffentlichung | Mitglied(er) der Patentfamilie | | Datum der Veröffentlichung |
|---|---|---|---|---|
| US 2009291502    A1 | 26-11-2009 | EP<br>JP<br>WO | 2116592 A1<br>2008136401 A<br>2008065811 A1 | 11-11-2009<br>19-06-2008<br>05-06-2008 |
| EP 0292899    A2 | 30-11-1988 | DE<br>JP<br>JP<br>US | 3718066 A1<br>1003560 A<br>2553150 B2<br>4907158 A | 08-12-1988<br>09-01-1989<br>13-11-1996<br>06-03-1990 |
| DE 102007046267 A1 | 02-04-2009 | WO | 2009040274 A2 | 02-04-2009 |
| JP 2005258413    A | 22-09-2005 | KEINE | | |
| EP 1873232    A1 | 02-01-2008 | JP<br>US | 2008005768 A<br>2008002868 A1 | 17-01-2008<br>03-01-2008 |
| WO 02052393    A1 | 04-07-2002 | EP<br>US | 1350156 A1<br>2002149628 A1 | 08-10-2003<br>17-10-2002 |
| DE 10136572    A1 | 13-02-2003 | AU<br>WO<br>JP<br>US<br>US | 2002355887 A1<br>03016463 A2<br>2005500056 T<br>2006274406 A1<br>2004172014 A1 | 03-03-2003<br>27-02-2003<br>06-01-2005<br>07-12-2006<br>02-09-2004 |
| DE 102005053669 A1 | 16-05-2007 | EP<br>WO<br>JP<br>US | 1946173 A1<br>2007054161 A1<br>2009515151 T<br>2009078885 A1 | 23-07-2008<br>18-05-2007<br>09-04-2009<br>26-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 0292899 B1
- DE 102005053669 B4
- DE 102007046267 A1